(19) **Europäisches Patentamt**
**European Patent Office**
**Office européen des brevets**

(11) **EP 1 325 350 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**13.02.2019 Patentblatt 2019/07**

(45) Hinweis auf die Patenterteilung:
**17.10.2007 Patentblatt 2007/42**

(21) Anmeldenummer: **01986767.0**

(22) Anmeldetag: **10.10.2001**

(51) Int Cl.:
*G01S 13/58* (2006.01)    *G01S 13/34* (2006.01)

(86) Internationale Anmeldenummer:
**PCT/DE2001/003857**

(87) Internationale Veröffentlichungsnummer:
**WO 2002/031529 (18.04.2002 Gazette 2002/16)**

(54) **VERFAHREN UND VORRICHTUNG ZUR BESTIMMUNG VON ABSTAND UND RELATIVGESCHWINDIGKEIT EINES ENTFERNTEN OBJEKTES**

METHOD AND DEVICE FOR DETERMINING SEPARATION AND RELATIVE SPEED OF A DISTANT OBJECT

PROCEDE ET DISPOSITIF POUR DETERMINER L'ELOIGNEMENT D'UN OBJET ELOIGNE ET LA VITESSE RELATIVE DE CELUI-CI

(84) Benannte Vertragsstaaten:
**AT BE CH CY DE DK ES FI FR GB GR IE IT LI LU MC NL PT SE TR**

(30) Priorität: **10.10.2000 DE 10050278**

(43) Veröffentlichungstag der Anmeldung:
**09.07.2003 Patentblatt 2003/28**

(73) Patentinhaber: **S.M.S. Smart Microwave Sensors GmbH**
**38106 Braunschweig (DE)**

(72) Erfinder:
- **MENDE, Ralph**
  **38102 Braunschweig (DE)**
- **ROHLING, Hermann**
  **38304 Wolfenbüttel (DE)**
- **MEINECKE, Marc-Michael**
  **38524 Sassenburg/Triangel (DE)**

(74) Vertreter: **Lins, Edgar et al**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
US-A- 3 750 171    US-A- 5 349 358
US-A- 5 768 131    US-A- 5 963 163

- **MEINECKE M ET AL: "Combination of LFMCW and FSK Modulation Principles for Automotive Radar Systems" GERMAN RADAR SYMPOSIUM GRS2000, BERLIN, GERMANY, 11-12 OCTOBER 2000, [Online] XP002195247 Gefunden im Internet: <URL:www.smartmicro.de/html/publications.html> [gefunden am 2002-04-05]**

**EP 1 325 350 B2**

**Beschreibung**

Die Erfindung betrifft ein Verfahren zur Bestimmung von Abstand und Relativgeschwindigkeit wenigstens eines von einem Beobachtungspunkt entfernten Objekts mit Hilfe von vom Beobachtungspunkt ausgesandten elektromagnetischen Signalen, deren Frequenz während eines Messintervalls über einen Modulationsbereich ($f_{Sweep}$) so verschoben wird, dass die Frequenz eines von einem Objekt reflektierten Echosignals eine Information über den Abstand R enthält, wobei die elektromagnetischen Signale in Form von abwechselnd ausgesandten, zueinander einen Frequenzabstand ($f_{Shift}$) aufweisenden Signalabschnitten (A, B), ausgesandt werden und wobei die Phasendifferenz ($\Delta\varphi$) zwischen den aus der Folge der jeweiligen Signalabschnitte (A, B) entstandenen Echosignale und die Frequenz der Echosignale ermittelt wird.

Die Erfindung betrifft ferner eine Vorrichtung zur Bestimmung von Abstand (R) und Relativgeschwindigkeit (v) wenigstens eines von einem Beobachtungspunkt entfernten Objekts mit Hilfe einer elektromagnetischen Sendeeinrichtung zur Aussendung von elektromagnetischen Signalen, deren Frequenz während eines Messintervalls über einen Modulationsbereich ($f_{Sweep}$) so verschoben wird, dass die Frequenz eines von einem Objekt reflektierten Echosignals eine Information über den Abstand R enthält, wobei die Sendeeinrichtung die elektromagnetischen Signale in Form von abwechselnd ausgesandten, zueinander einen Frequenzabstand ($f_{Shift}$) aufweisenden Signalabschnitten (A, B) aussendet, und mit einer Empfangseinrichtung zum Empfang der von dem Objekt reflektierten Signalabschnitte, wobei die Empfangseinrichtung eine Einrichtung zur Feststellung der Phasendifferenz ($\Delta\varphi$) zwischen den aus der Folge der jeweiligen Signalabschnitte (A, B) entstandenen Echosignale und zur Feststellung der Frequenz der Echosignale aufweist.

Das Hauptanwendungsgebiet der vorliegenden Erfindung liegt in der Verwendung im Automobilbereich, wo derartige Verfahren zur adaptiven Zielführung mit 77 GHz-Radaren bekannt sind. Für Sicherheitsanwendungen wie die Verhinderung von Zusammenstößen oder ein führerloses Fahren wird eine hohe Zuverlässigkeit und geringe Reaktionszeit benötigt, die in den bisherigen Zielführungssystemen nicht realisiert ist.

Das eingangs erwähnte gattungsgemäße Verfahren und die entsprechende Vorrichtung beruhen auf der Aussendung von Signalabschnitten mit einer festen Frequenz, wobei die vom Objekt reflektierten Signalabschnitte regelmäßig mit der entsprechenden Sendefrequenz gemischt werden, sodass im Basisband ein Messsignal für die Dopplerfrequenz bei bewegten Objekten entsteht.

Bei einer Frequenz-Shift-Codierung (Frequency Shift Keying - FSK) werden Signalabschnitte mit zwei verschiedenen Frequenzen während eines sogenannten coherenten Verarbeitungsintervalls (Coherent Processing Interval - CPI) ausgesandt. Das Echosignal kann beispielsweise mit einem Homodyn-Empfänger in das Basisband umgesetzt werden. Der Frequenzabstand zwischen den beiden Frequenzen ist dabei sehr klein gegenüber den Frequenzen selbst. Dabei können die verschiedenen Frequenzen zeitlich verschachtelt zueinander ausgesandt werden (US 3,750,171). Das zeitdiskrete Empfangssignal wird innerhalb jedes CPI Fourier-transformiert und mit Hilfe eines Schwellwertdetektors detektiert. Für die Detektion wird vorzugsweise das CFAR-Verfahren angewendet. Die Echosignale der beiden Frequenzen führen zu einer gleichen Dopplerfrequenzposition, da die Differenzfrequenz zwischen den beiden Frequenzen sehr klein gegenüber den Frequenzen selbst ist. Aufgrund der unterschiedlichen Frequenzen ergeben sich für beide Echosignale jedoch unterschiedliche Phaseninformationen. Die Phasendifferenz $\Delta\varphi$ bildet die Basis für die Bestimmung des Abstandes R. Es gilt:

$$R = -\frac{c \cdot \Delta\varphi}{4\pi \cdot f_{Step}},$$

wobei $f_{Step}$ der Frequenzabstand zwischen den beiden Signalabschnitten ist. Dieses Verfahren lässt sich relativ einfach durch eine entsprechende Modulation eines spannungsgesteuerten Oszillators (Voltage Control Oscillator - VCO) realisieren. Allerdings erlaubt das Verfahren keine Entfernungsauflösung von Objekten gleicher oder annähernd gleicher Relativgeschwindigkeit in Messrichtung. Für Automobilanwendungen ist dieses Verfahren ungeeignet, da z.B. feststehende Ziele, wie z.B. Verkehrsschilder, Laternen, Bäume, zu vielfachen, nicht voneinander zu trennenden Echosignalen führen. Auch sich bewegende Objekte können, wenn sie eine annähernd gleiche Relativgeschwindigkeit zur Sendeeinrichtung haben, nicht in der Entfernung aufgelöst werden. Ein solcher Zustand, der ein derartiges Auflösungsproblem beinhaltet, ist für eine automatische Auswertung nicht erkennbar, sodass Fehl-auswertungen unvermeidlich sind.

Ein anderes bekanntes Verfahren verwendet eine lineare Frequenzmodulationstechnik (LFM), bei der die Sendefrequenz mit einer dreieckigen Wellenform über einen Modulationsbereich $f_{Sweep}$ moduliert wird. Die Bereichsauflö-

sung $\Delta R = \dfrac{c}{2 \cdot f_{Sweep}}$ führt bei einem einmaligen Überstreichen des Modulationsbereichs zu einer mehrdeutigen Messung für den Abstand und die Relativgeschwindigkeit. Wenn innerhalb eines einzelnen CPI das abgemischte Empfangssignal digitalisiert und Fourier-transformiert wird, entsteht im Fourierspektrum ein Peak an der Stelle k. Die Mehrdeutigkeiten für den Abstand und die Geschwindigkeit können durch folgende Gleichungen dargestellt werden:

$$ \kappa = \frac{v}{\Delta v} - \frac{R}{\Delta R} \qquad \Longleftrightarrow \qquad \frac{v}{\Delta v} = \frac{R}{\Delta R} + \kappa, $$

wobei $\Delta v$ die Geschwindigkeitsauflösung angibt, die sich aus der CPI-Länge $T_{Chirp}$ ergibt

$$ \left( \Delta v = \frac{\lambda}{2 \cdot T_{Chirp}} \right). $$

Wegen der Mehrdeutigkeiten werden mehrere Messungen mit unterschiedlichen Steigungen der Frequenzänderung oder mit unterschiedlichen Signalformen (US 5,768,131) ausgeführt. Dabei wird allerdings die Messzeit in unerwünschter Weise verlängert, was zu einer Beeinträchtigung der für Sicherheitsanwendungen gewünschten kurzen Reaktionszeit führt

Durch die US 5,963,163 sind ein Verfahren und eine Vorrichtung der eingangs erwähnten Art bekannt. Dabei werden Signalabschnitte ausgesandt, die aus parallelen, abwechselnd ausgesandten Modulationsrampen bestehen, die um eine feste Frequenz $\Delta f$ voneinander getrennt sind, wobei die Differenzfrequenz sehr klein gegenüber der Grundfrequenz der Signale ist. Der Abstand des Objekts ergibt sich dabei ausschließlich als Funktion der Phasendifferenz zwischen den Echosignalen der beiden Rampensignale, die in Form der Modulationsrampen als Signalabschnitte ausgesandt werden. Die empfangenen Signale werden sofort voneinander getrennt und in unterschiedlichen analogen Kanälen verarbeitet, wobei eins der Signale um die Impulsbreite der ausgesandten Signale analog verzögert wird. Das Auswertungsverfahren besteht darin, über die Distanzabschätzung mittels der gemessenen Phasenverschiebung $\Delta\varphi$ die bei einer Rampenmessung (LFM) auftretenden Mehrdeutigkeiten in der Abstands-Geschwindigkeits-Ebene zu eliminieren. Dieses bekannte Verfahren ist aufwändig und messtechnisch problematisch. Die Rekonstruktion der in unterbrochenen Signalabschnitten übersandten Messsignale in den analogen Kanälen erfordert eine aufwändige Glättung. Darüber hinaus erzeugen bereits geringe Fehler in der Zeitsteuerung der Abtastung (am Ende der Rampenabschnitte) Phasenfehler, die unmittelbar einen Messfehler bewirken.

US 3,750,171 offenbart eine Dopplerradaranordnung, bei der zwei unterschiedliche Frequenzsignale nacheinander ausgesandt werden. Die relative Geschwindigkeit des Objekts, an dem die Echosignale reflektieren, wird in üblicherweise durch die Doppler-Frequenzverschiebung bestimmt. Für die Abstandsmessung wird ein Phasenwinkel zwischen den beiden Dopplersignalen bestimmt. Zur Erhöhung der Zuverlässigkeit der Messung werden zusammengesetzte Dopplersignale gebildet, wofür jede der beiden ausgesandten Frequenzen nochmals um einen bestimmten Frequenzbetrag verschoben ausgesandt wird. Für die Phasendetektion wird die Phasendifferenz zwischen den zu den beiden Signalen gehörenden zusammengesetzten Dopplersignalen gebildet. Ein Empfänger für die Echosignale weist zwei separate analoge Filter- und Verarbeitungskanäle für die empfangenen Signale auf, die mittels eines Umschaltgenerators im Takt der ausgesandten Signale angesteuert werden, sodass sofort nach dem Empfang der Signale eine Trennung der Echosignale in den ihnen jeweils zugeordneten analogen Kanal erfolgt. Die Vorrichtung macht nicht von der linearen Frequenzmodulationstechnik (LFM) Gebrauch, bei der die Sendefrequenz über einen Modulationsbereich so moduliert wird, dass die Frequenz des Echosignals eine Information über den Abstand enthält, wie oben erläutert worden ist. Das Verfahren ist ungeeignet, wenn die ausgesandten Signale von mehreren Objekten reflektiert werden.

Der Erfindung liegt die Aufgabe zu Grunde, die Bestimmung von Abstand und Relativgeschwindigkeit mit einer verbesserten Messsicherheit bei kurzer Reaktionszeit zu ermöglichen.

Erfindungsgemäß wird diese Aufgabe mit einem Verfahren mit den Merkmalen des Patentanspruchs 1 gelöst

Erfindungsgemäß wird diese Aufgabe ferner mit einer Vorrichtung mit den Merkmalen des Patentanspruchs 9 gelöst.

Eine erfindungsgemäße Vorrichtung zur Lösung der Aufgabe ist zur Durchführung des Verfahrens eingerichtet

Die erfindungsgemäße Bestimmung von Abstand und Relativgeschwindigkeit erlaubt überraschend einfach eindeutige Abstands- und Geschwindigkeitsmessungen. Erfindungsgemäß werden die beiden Signalabschnitte mit unterschiedlichen Frequenzen schrittweise über den endlichen Modulationsbereich frequenzmoduliert. Das empfangene Echosignal kann in üblicher weise in das Basisband heruntergemischt und am Ende jedes Frequenzschrittes ausgewertet werden.

Jede der beiden Signalsequenzen kann separat durch eine Fouriertransformation und eine Schwellwertdetektion ausgewertet werden. Ein einzelnes Objekt mit einem bestimmten Abstand und einer bestimmten Geschwindigkeit wird in beiden Sequenzen bei dem selben ganzzahligen Index $\kappa = \kappa_A = \kappa_B$ im fouriertransformierten Ausgangssignal der beiden ausgewerteten Spektren detektiert. In beiden Signalsequenzen werden dieselben Abstands- und Geschwindigkeits-Mehrdeutigkeiten, die oben erwähnt worden sind, auftreten. Die gemessenen Phasen $\varphi_A$ und $\varphi_B$ der beiden komplexen Spektralpeaks unterscheiden sich und enthalten die differenzierende Abstands- und Geschwindigkeitsinformation, die zur Auflösung der Mehrdeutigkeit verwendet werden kann. Aufgrund der kohärenten Messtechnik in den beiden Sequenzen kann die Phasendifferenz $\Delta\varphi = \varphi_B - \varphi_A$ für die Abstandsbestimmung und die Geschwindigkeitsbestimmung ausgewertet werden. Die Phasendifferenz $\Delta\varphi$ kann analytisch durch die folgende Gleichung beschrieben werden:

$$\Delta\varphi = \frac{\pi}{N-1} \cdot \frac{v}{\Delta v} - 4\,\pi \cdot R \cdot \frac{f_{\text{Shift}}}{c}$$

wobei N die Anzahl der Frequenzschritte In jeder Sendesignalsequenz A und B der beiden verschiedenen Frequenzen ist. Bei der ersten Berechnung ist $\Delta\varphi$ mehrdeutig, jedoch können die Mehrdeutigkeiten durch die Kombination der Messergebnisse gemäß den obigen Gleichungen aufgelöst werden. Der Schnittpunkt der beiden Messresultate führt zu einer eindeutigen Bestimmung des Abstands und der Relativgeschwindigkeit.

Während bei der herkömmlichen Frequenzshift-Codierung (FSK) die Signalabschnitte der beiden Frequenzen jeweils so lange ausgesendet werden, dass die empfangenen Echosignale mit der gewünschten Abtastrate (z.B. 64 samples) vollständig abgetastet und die Abtastwerte der zugehörigen Auswertungseinrichtung (z.B. Fouriertransformation) zugeleitet werden, bevor die Abtastung des folgenden Signalabschnitts der anderen Frequenz durchgeführt und die Abtastwerte der dazu gehörenden anderen Auswertungseinrichtung zugeführt werden, sind die erfindungsgemäß verwendeten Signalabschnitte wesentlich kürzer. Die Umschaltung auf die andere Frequenz findet statt, bevor alle nötigen Abtastwerte für die eine Frequenz gesammelt worden sind. Im bevorzugten Fall wird für jeden Signalabschnitt nur ein Abtastwert detektiert, sodass die Abtastwerte abwechselnd den Auswertungseinrichtungen der einen und der anderen Frequenz zugeleitet werden, bis in einem Messintervall die benötigte Anzahl von Abtastwerten für die beiden Frequenzen erhalten worden sind.

Durch diese abwechselnd verwobene Aussendung der Teilsignale lassen sich gute Entfernungsauflösungen mit kurzer Messzeit realisieren und auch dynamische Zielbewegungen gut detektieren.

Durch die erfindungsgemäße Aussendung von Signalabschnitten mit einer konstanten Frequenz ergeben sich gegenüber der Verwendung von Modulationsrampen, wie sie gemäß US 5,963,163 ausgesandt werden, erhebliche Vorteile. Für jeden Frequenzschritt, also für jeden Signalabschnitt, lässt sich ein stationärer Phasenwert feststellen, während sich bei Modulationsrampen die Phasenwerte kontinuierlich verändern. Dadurch ist es möglich, die Phasenwerte abzutasten und für die empfangenen Echo-Signalabschnitte sequenziell in einem gemeinsamen analogen Kanal zu verarbeiten, bis eine Analog-Digital-Wandlung für die Durchführung einer bevorzugten Fouriertransformation vorgenommen wird. Im Anschluss an die Analog-Digital-Wandlung werden die Werte für die verschiedenen Echosignale separat ausgewertet, vorzugsweise der Fouriertransformation unterzogen, um durch die Feststellung der Frequenzpeaks und deren Phasenlage die Phasendifferenz zwischen den ausgesandten Signalen festzustellen.

Wie unten näher beschrieben werden wird, führt das erfindungsgemäße Verfahren zu einer mehrdeutigen Abhängigkeit sowohl der gemessenen Entfernung als auch der gemessenen Geschwindigkeit von der Phasendifferenz $\Delta\varphi$ und der Frequenz. Die Eindeutigkeit des Messergebnisses wird durch eine Kombination der Messergebnisse für den Abstand und die Geschwindigkeit erzielt, in dem der Schnittpunkt der Mehrdeutigkeitsgeraden für beide Messungen bestimmt wird.

Für eine Vereinfachung der Berechnung ist es zweckmäßig, wenn der Abstand der beiden Frequenzen der Signale über den gesamten Modulationsbereich gleich bleibt. Prinzipiell ist eine geringe Veränderung der beiden Frequenzen, d. h. ein unterschiedlicher Frequenzhub für die beiden Frequenzen akzeptabel und ggf. mit Vorteil ausnutzbar.

Bevorzugt ist ferner, dass für jedes Aussenden der Signalabschnitte der beiden Frequenzen die Verschiebung um einen Frequenzschritt vorgenommen wird, da die Aussendung von Signalabschnitten mit gleicher Frequenz lediglich redundante Messungen entstehen würden.

Für eine vereinfachte Auswertung ist es ferner zweckmäßig, wenn der Frequenzschritt dem Doppelten des Abstands der beiden Frequenzen entspricht.

Das erfindungsgemäße Verfahren eignet sich sowohl für eine kontinuierliche Aussendung der abwechselnden Signalabschnitte als auch für einen Impulsbetrieb, bei dem zwischen der Aussendung eines Signalabschnitts der einen Frequenz und der Aussendung eines Signalabschnitts der anderen Frequenz ein zeitlicher Abstand eingehalten wird. Soll das nach dem Aussenden des Signalabschnitts empfangene Signal heruntergemischt werden, kann hierfür der Sendeoszillator mit der Trägerfrequenz weiter laufen.

Die erfindungsgemäße Vorgehensweise lässt ich selbstverständlich auch mit mehr als zwei Signalen ausführen, deren Signalabschnitte abwechselnd ausgesandt werden, um höhere Messsicherheiten durch die Auswertung mehrerer Phasenunterschiede zu erzielen.

Die Erfindung soll im Folgenden anhand von in der Zeichnung dargestellten Ausführungsbeispielen näher erläutert werden. Es zeigen:

**Figur 1**     das Prinzip der erfindungsgemäß ausgesendeten Wellenformen

**Figur 2**     ein graphisch dargestelltes Prinzip zur Lösung der Mehrdeutigkeiten der Messungen

**Figur 3**     ein Beispiel für eine optimierte erfindungsgemäße Wellenform

**Figur 4**     ein Diagramm gemäß Figur 2 für einen optimierten Frequenzschritt.

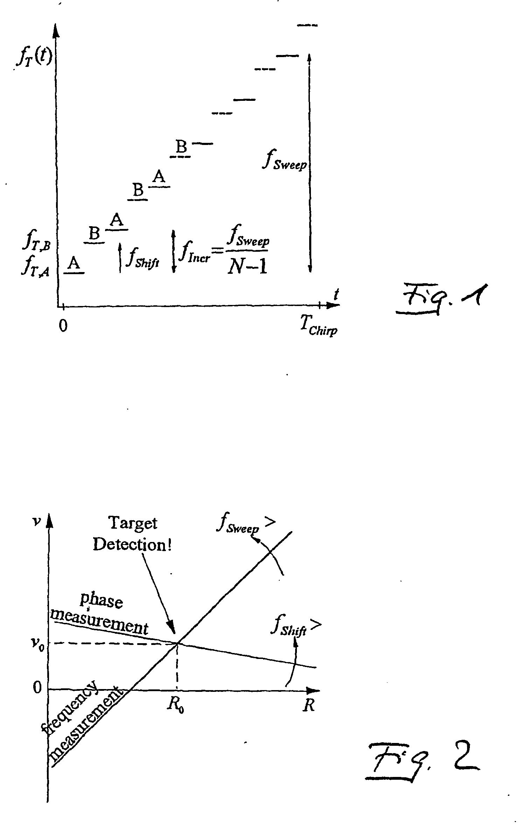

Figur 1 zeigt Signalabschnitte A, die von einer Ausgangsfrequenz $f_{T,\,A}$ jeweils um einen Frequenzschritt $f_{Incr}$ zueinander versetzt sind. Die Signalabschnitte A werden abwechselnd mit Signalabschnitten B ausgesandt, die ausgehend von einer Ausgangsfrequenz $f_{T,\,B}$ ebenfalls um jeweils einen Frequenzschritt versetzt sind, um so einen Modulationsbereich $f_{Sweep}$ zu überstreichen. Die Frequenzschritte $f_{Incr}$ sind über den Modulationsbereich $f_{Sweep}$ gleich groß, sodass gilt

$$f_{Incr} = \frac{f_{Sweep}}{N-1}.$$

Die beiden so ineinander verwobenen Signalabschnittsfolgen A, B werden ausgesandt und nach dem Empfang der Echosignale separat durch Fouriertransformation und Schwellwerttechnik ausgewertet. Durch die oben erwähnte Kombination der Messergebnisse wird unter Berücksichtigung der Phasendifferenz $\Delta\varphi$ eindeutige Messergebnisse erhalten zu:

$$R_0 = \frac{c \cdot \Delta R}{\pi} \cdot \frac{(N-1) \cdot \Delta\varphi - \pi \cdot \kappa}{c-4 \cdot (N-1) \cdot f_{Shift} \cdot \Delta R},$$

$$v_0 = \frac{(N-1) \cdot \Delta v}{\pi} \cdot \frac{c \cdot \Delta\varphi - 4\pi \cdot f_{Shift} \cdot \Delta R \cdot \kappa}{c - 4 \cdot (N-1) \cdot f_{Shift} \cdot \Delta R}$$

Figur 2 verdeutlicht, dass die Phasenmessung und die Frequenzmessung an sich mehrdeutig sind, dass aber die Kombination der beiden Messungen zu einem Schnittpunkt der Geraden führt, der die gewünschten Werte für $R_0$ und $v_0$ ermitteln lässt.

In einem Beispiel für Automobilanwendungen beträgt die Signalbandbreite $f_{Sweep}$ = 150 MHz, um eine Abstandsauflösung von 1 m zu gewährleisten. Die schrittweise Frequenzmodulation ist in N = 256 separate Bursts A oder B aufgeteilt, sodass sich ergibt

$$f_{Incr} = \frac{150 \text{ MHz}}{255} = 588 \text{ kHz}.$$

Die Messzeit innerhalb eines einzelnen Bursts A oder B beträgt beispielsweise 5 μs, woraus sich eine Chirp-Dauer der verwobenen Signale von $T_{Chirp}$ = 2,56 ms ergibt, woraus eine Geschwindigkeitsauflösung von

$$\Delta v = \frac{C}{2f_T} \cdot \frac{1}{T_{Chirp}}$$

zu 2,7 km/h ergibt.

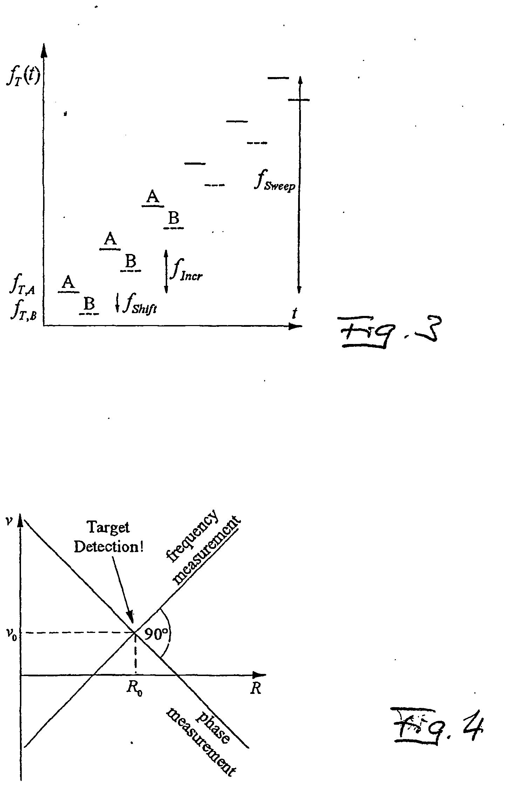

Der Frequenzabstand $f_{Shift}$ wird auf der Basis einer großen Abstands- und Geschwindigkeitsgenauigkeit optimiert. Die größte Genauigkeit entsteht, wenn der Schnittpunkt der R-Geraden und der v-Geraden aus zwei orthogonalen Linien gebildet ist, wie dies in Figur 4 dargestellt ist. Für diese Optimierung ist der Frequenzabstand zwischen den Signalfrequenzen A und B

$$f_{Shift} = -\frac{1}{2} \cdot f_{Incr}$$

also im vorliegenden Fall 294 kHz. In diesem speziellen Fall ergeben sich die obigen Gleichungen zu

$$\frac{R_0}{\Delta R} = \frac{N-1}{2\pi} \cdot \Delta\varphi - \frac{\kappa}{2},$$

und

$$\frac{v_0}{\Delta v} = \frac{N-1}{2\pi} \cdot \Delta\varphi + \frac{\kappa}{2}.$$

Es zeigt sich somit, dass mit der erfindungsgemäßen Wellenform in einfacher Weise eine Abstands- und Relativgeschwindigkeitsbestimmung während eines einzigen Chirps möglich ist, also in kürzester Messzeit. Die angegebenen Optimierungen und bevorzugten Ausführungsformen führen zu einfachsten Auswertungen und einem geringen Hardware-Aufwand.

**Patentansprüche**

1.  Verfahren zur Bestimmung von Abstand (R) und Relativgeschwindigkeit (v) wenigstens eines von einem Beobachtungspunkt entfernten Objekts mit Hilfe von vom Beobachtungspunkt ausgesandten elektromagnetischen Signalen, deren Frequenz während eines Messintervalls über einen Modulationsbereich ($f_{Sweep}$) so verschoben wird, dass die Frequenz eines von einem Objekt reflektierten Echosignals eine Information über den Abstand (R) enthält, wobei die elektromagnetischen Signale in Form von abwechselnd ausgesandten, zueinander einen Frequenzabstand ($f_{Shift}$) aufweisenden Signalabschnitten (A, B) ausgesandt werden und wobei die Phasendifferenz ($\Delta\varphi$) zwischen den, aus der Folge der jeweiligen Signalabschnitte (A, B) entstandenen, Echosignalen und die Frequenz der Echosignale ermittelt wird, **dadurch gekennzeichnet, dass** die Signalabschnitte (A, B) jeweils mit konstanter Frequenz und über den Modulationsbereich ($f_{Sweep}$) um jeweils einen Frequenzschritt ($f_{Incr}$) stufenweise verschoben ausgesandt werden,
    dass die Echosignale in einem gemeinsamen analogen Kanal bis zu einer Analog-Digital-Wandlung verarbeitet werden und
    dass anschließend für jeden Signalabschnitt (A, B) wenigstens ein Abtastwert entnommen wird und
    dass die entnommenen Abtastwerte für die verschiedenen Echosignale separat zur Bestimmung der Phasendifferenz ($\Delta\varphi$) durch Fouriertransformation und Feststellung der Phasendifferenz der dabei auftretenden, der Frequenz der Echosignale der Signalabschnitte (A, B) entsprechenden Peaks ausgewertet werden.

2.  Verfahren nach Anspruch 1, **dadurch gekennzeichnet, dass** eine Eindeutigkeit der Messung des Abstandes (R) und der Geschwindigkeit (v) durch Kombination der von Frequenz ($\kappa$) und Phasendifferenz ($\Delta\varphi$) abhängenden mehrdeutigen Messungen für Abstand (R) einerseits und Geschwindigkeit (v) andererseits hergestellt wird.

3. Verfahren nach einem der Ansprüche 1 oder 2, **dadurch gekennzeichnet, dass** der Abstand ($f_{Shift}$) der beiden Frequenzen über den gesamten Modulationsbereich ($f_{Sweep}$) gleichbleibt.

4. Verfahren nach einem der Ansprüche 1 bis 3, **dadurch gekennzeichnet, dass** für jedes Aussenden der Signalabschnitte (A, B) der beiden Frequenzen die Verschiebung um einen Frequenzschritt ($f_{Incr}$) vorgenommen wird.

5. Verfahren nach einem der Ansprüche 1 bis 4, **dadurch gekennzeichnet, dass** der Frequenzschritt ($f_{Incr}$) dem Doppelten des Abstandes ($f_{Shift}$) der beiden Frequenzen entspricht.

6. Verfahren nach einem der Ansprüche 1 bis 5, **dadurch gekennzeichnet, dass** die abwechselnden Signalabschnitte (A, B) kontinuierlich ausgesandt und empfangen werden.

7. Verfahren nach einem der Ansprüche 1 bis 5, **dadurch gekennzeichnet, dass** zwischen der Aussendung eines Signalabschnitts (A) der einen Frequenz und der Aussendung eines Signalabschnitts (B) der anderen Frequenz ein zeitlicher Abstand eingehalten wird.

8. Verfahren nach einem der Ansprüche 1 bis 7, **dadurch gekennzeichnet, dass** mehr als zwei Signale verwendet werden, die mit abwechselnden Signalabschnitten und voneinander verschiedenen Frequenzen ausgesandt werden.

9. Vorrichtung zur Bestimmung von Abstand (R) und Relativgeschwindigkeit (v) wenigstens eines von einem Beobachtungspunkt entfernten Objekts mit Hilfe einer elektromagnetischen Sendeeinrichtung zur Aussendung von elektromagnetischen Signalen, deren Frequenz während eines Messintervalls über einen Modulationsbereich ($f_{Sweep}$) so verschoben wird, dass die Frequenz eines von einem Objekt reflektierten Echosignals eine Information über den Abstand (R) enthält, wobei die Sendeeinrichtung die elektromagnetischen Signale in Form von abwechselnd ausgesandten, zueinander einen Frequenzabstand ($f_{Shift}$) aufweisenden Signalabschnitten (A, B) aussendet, und mit einer Empfangseinrichtung zum Empfang der von dem Objekt reflektierten Signalabschnitte, wobei die Empfangseinrichtung eine Einrichtung zur Feststellung der Phasendifferenz ($\Delta\varphi$) zwischen den, aus der Folge der jeweiligen Signalabschnitte (A, B) entstandenen, Echosignalen und zur Feststellung der Frequenz der Echosignale aufweist, **dadurch gekennzeichnet, dass** die Signalabschnitte (A, B) mit jeweils konstanter Frequenz und über den Modulationsbereich ($f_{Sweep}$) um jeweils einen Frequenzschritt ($f_{Incr}$) stufenweise verschoben ausgesandt werden, dass ein gemeinsamer analoger Kanal für die Verarbeitung der Echosignale bis zu einer Analog-Digital-Wandlung vorgesehen ist und dass in der Empfangseinrichtung für jeden Signalabschnitt (A, B) wenigstens ein Abtastwert entnommen wird und die entnommenen Abtastwerte für die verschiedenen Echosignale separat zur Bestimmung der Phasendifferenz ($\Delta\varphi$) ausgewertet werden, indem die Empfangseinrichtung eine Fouriertransformationsstufe und eine nachgeschaltete Feststelleinrichtung zur Feststellung der Phasendifferenz der in der Fouriertransformationsstufe gebildeten, der Frequenz der Echosignale der Signalabschnitte (A, B) entsprechenden Peaks aufweist.

10. Vorrichtung nach Anspruch 9, **dadurch gekennzeichnet, dass** in der Empfangseinrichtung eine Eindeutigkeit der Messung des Abstandes (R) und der Geschwindigkeit (v) durch Kombination der von Frequenz ($\kappa$) und Phasendifferenz ($\Delta\varphi$) abhängenden mehrdeutigen Messungen für Abstand einerseits und Geschwindigkeit andererseits hergestellt wird.

11. Vorrichtung nach Anspruch 9 oder 10, **dadurch gekennzeichnet, dass** der Abstand ($f_{Shift}$) der beiden Frequenzen über den gesamten Modulationsbereich ($f_{Sweep}$) gleichbleibt.

12. Vorrichtung nach einem der Ansprüche 9 bis 11, **dadurch gekennzeichnet, dass** für jedes Aussenden der Signalabschnitte (A, B) der beiden Frequenzen die Verschiebung um einen Frequenzschritt ($f_{Incr}$) vorgenommen wird.

13. Vorrichtung nach einem der Ansprüche 9 bis 12, **dadurch gekennzeichnet, dass** das der Frequenzschritt ($f_{Incr}$) dem Doppelten des Abstandes ($f_{Shift}$) der beiden Frequenzen entspricht.

14. Vorrichtung nach einem der Ansprüche 9 bis 13, **dadurch gekennzeichnet, dass** die abwechselnden Signalabschnitte (A, B) kontinuierlich ausgesandt und empfangen werden.

15. Vorrichtung nach einem der Ansprüche 9 bis 13, **dadurch gekennzeichnet, dass** zwischen der Aussendung eines Signalabschnitts (A) der einen Frequenz und der Aussendung eines Signalabschnitts (B) der anderen Frequenz ein zeitlicher Abstand eingehalten wird.

16. Vorrichtung nach einem der Ansprüche 9 bis 15, **gekennzeichnet durch** eine elektromagnetische Sendeeinrichtung zur Aussendung von mehr als zwei Signalen in Form von abwechselnden Signalabschnitten mit voneinander verschiedenen Frequenzen.


## Claims

1. Method for determining the distance (R) and relative speed (v) of at least one object remote from an observation point with the aid of electromagnetic signals, which are emitted from the observation point and whose frequency is shifted over a modulation range ($f_{Sweep}$) during a measuring interval such that the frequency of an echo signal reflected by an object includes an item of information on the distance (R), the electromagnetic signals being emitted in the form of signal sections (A, B) that are emitted alternately and exhibit a frequency spacing ($f_{Shift}$) from one another, and the phase difference ($\Delta\varphi$) between the echo signals originating from the sequence of the respective signal sections (A, B), and the frequency of the echo signals being determined, **characterized in that** the signal sections (A, B) are respectively emitted with constant frequency and in a fashion shifted in steps over the modulation range ($f_{Sweep}$) by in each case one frequency step ($f_{Incr}$), **in that** the echo signals are processed in a common analogue channel as far as an analogue-to-digital conversion, and **in that** subsequently at least one sample is taken for each signal section (A, B), and **in that** the samples taken for the various echo signals are evaluated separately in order to determine the phase difference ($\Delta\varphi$) by Fourier transformation and by determining the phase difference between the peaks occurring thereby that correspond to the frequency of the echo signals of the signal steps (A, B).

2. Method according to Claim 1, **characterized in that** a unambiguity of the measurement of the distance (R) and the speed (v) is created by a combination of the ambiguous measurements for distance (R) on the one hand, and speed (v) on the other hand, which depend on frequency ($\kappa$) and phase difference ($\Delta\varphi$).

3. Method according to one of Claims 1 and 2, **characterized in that** the spacing ($f_{Shift}$) between two frequencies remains the same over the entire modulation range ($f_{Sweep}$).

4. Method according to one of Claims 1 to 3, **characterized in that** the shift is undertaken by one frequency step ($f_{Incr}$) for each emission of the signal sections (A, B) of the two frequencies.

5. Method according to one of Claims 1 to 4, **characterized in that** the frequency step ($f_{Incr}$) corresponds to double the spacing ($f_{Shift}$) between the two frequencies.

6. Method according to one of Claims 1 to 5, **characterized in that** the alternating signal sections (A, B) are emitted and received continuously.

7. Method according to one of Claims 1 to 5, **characterized in that** a temporal spacing is kept between the emission of a signal section (A) of one frequency and the emission of a signal section (B) of the other frequency.

8. Method according to one of Claims 1 to 7, **characterized in that** use is made of more than two signals that are emitted with alternating signal sections and mutually differing frequency.

9. Apparatus for determining the distance (R) and relative speed (v) of at least one object remote from an observation point with the aid of an electromagnetic transmitter for emitting electromagnetic signals whose frequency is shifted over a modulation range ($f_{Sweep}$) during a measuring interval such that the frequency of an echo signal reflected by an object includes an item of information on the distance (R), the transmitter emitting the electromagnetic signals in the form of signal sections (A, B) which are emitted alternately and exhibit a frequency spacing ($f_{Shift}$) from one another, and with the aid of a receiver for receiving the signal sections reflected by the object, the receiver having a device for establishing the phase difference ($\Delta\varphi$) between the echo signals originating from the sequence of the respective signal sections (A, B), and for establishing the frequency of the echo signals, **characterized in that** the signal sections (A, B) are respectively emitted with constant frequency and in a fashion shifted in steps over the modulation range ($f_{Sweep}$) by in each case one frequency step ($f_{Incr}$), **in that** a common analogue channel is provided for processing the echo signals as far as an analogue-to-digital conversion, and **in that** at least one sample is taken in the receiver for each signal section (A, B), and the samples taken for the various echo signals are evaluated separately in order to determine the phase difference ($\Delta\varphi$) the receiver has a Fourier transformation stage and a downstream determining device for determining the phase difference between the peaks that are formed in the Fourier transformation stage and correspond to the frequency of the echo signals of the signal sections (A, B).

10. Apparatus according to Claim 9, **characterized in that** a unambiguity of the measurement of the distance (R) and the speed (v) is created in the receiver by a combination of the ambiguous measurements for distance on the one hand, and speed on the other hand, which depend on frequency ($\kappa$) and phase difference ($\Delta\varphi$).

11. Apparatus according to Claim 9 or 10, **characterized in that** the spacing ($f_{Shift}$) between the two frequencies remains the same over the entire modulation range ($f_{Sweep}$).

12. Apparatus according to one of Claims 9 to 11, **characterized in that** the shift is undertaken by one frequency step ($f_{Incr}$) for each emission of the signal sections (A, B) of the two frequencies.

13. Apparatus according to one of Claims 9 to 12, **characterized in that** the frequency step ($f_{Incr}$) corresponds to double the spacing ($f_{Shift}$) between the two frequencies.

14. Apparatus according to one of Claims 9 to 13, **characterized in that** the alternating signal sections (A, B) are emitted and received continuously.

15. Apparatus according to one of Claims 9 to 13, **characterized in that** a temporal spacing is kept between the emission of a signal section (A) of one frequency and the emission of a signal section (B) of the other frequency.

16. Apparatus according to one of Claims 9 to 15, **characterized by** an electromagnetic transmitter for emitting more than two signals in the form of alternating signal sections with mutually differing frequencies.


**Revendications**

1. Procédé pour déterminer l'éloignement (R) et la vitesse relative (v) d'au moins un objet éloigné d'un point d'observation au moyen de signaux électromagnétiques émis à partir du point d'observation, dont la fréquence est déplacée, pendant un intervalle de mesure, dans une plage de modulation ($f_{Sweep}$) de telle sorte que la fréquence d'un signal d'écho réfléchi par un objet contient une information sur l'éloignement (R), les signaux électromagnétiques étant émis sous la forme de tronçons de signaux (A, B) émis alternativement avec un décalage de fréquence ($f_{Shift}$) l'un par rapport à l'autre, et la différence de phase ($\Delta\varphi$) entre les signaux d'écho engendrés à partir de la succession des tronçons de signaux respectifs (A, B) et la fréquence des signaux d'écho étant déterminées, **caractérisé en ce que**
les tronçons de signaux (A, B) sont émis chacun avec une fréquence constante et sur la plage de modulation ($f_{Sweep}$) avec chaque fois une fréquence incrémentée ($f_{Incr}$) par pas successifs et de façon décalée,
**en ce que** les signaux d'écho sont traités dans un canal commun analogique jusqu'à une conversion analogique-numérique, et
**en ce qu'**ensuite pour chaque tronçon de signal (A, B) au moins une valeur de palpage est prélevée et
**en ce que** les valeurs de palpage prélevées pour les différents signaux d'écho sont évaluées séparément pour déterminer la différence de phases ($\Delta\varphi$) par transformation de Fourier et pour déterminer la différence de phases des pics qui apparaissent et qui correspondent à la fréquence des signaux d'écho des tronçons de signaux (A, B).

2. Procédé selon la revendication 1,
**caractérisé en ce que**
on établit de façon univoque la mesure de l'éloignement (R) et de la vitesse (v) par combinaison des mesures équivoques dépendant de la fréquence (k) et de la différence de phases ($\Delta\varphi$) d'une part de l'éloignement (R) et d'autre part de la vitesse (v).

3. Procédé selon l'une des revendications 1 ou 2, **caractérisé en ce que** le décalage ($f_{Shift}$) des deux fréquences reste le même sur la totalité la plage de modulation ($f_{Sweep}$).

4. Procédé selon l'une des revendications 1 à 3, **caractérisé en ce que** pour chaque émission des tronçons de signaux (A, B) des deux fréquences, l'incrémentation à raison d'un pas de fréquence ($f_{Incr}$) est effectuée.

5. Procédé selon l'une des revendications 1 à 4, **caractérisé en ce que** le pas de fréquence ($f_{Incr}$) correspond au double du décalage ($f_{Shift}$) entre les deux fréquences.

6. Procédé selon l'une des revendications 1 à 5, **caractérisé en ce que** les tronçons de signaux alternatifs (A, B) sont émis et reçus continuellement.

7. Procédé selon l'une des revendications 1 à 5, **caractérisé en ce que** entre l'émission d'un tronçon de signal (A) de l'une des fréquences et l'émission d'un tronçon de signal (B) de l'autre fréquence, un décalage temporel est maintenu.

8. Procédé selon l'une des revendications 1 à 7, **caractérisé en ce que** plus de deux signaux sont utilisés et sont émis avec des tronçons de signaux alternatifs et des fréquences différentes.

9. Dispositif pour déterminer l'éloignement (R) et de la vitesse relative (v) d'au moins un objet éloigné d'un point d'observation au moyen d'un émetteur pour émettre des signaux électromagnétiques dont la fréquence est déplacée, pendant un intervalle de mesure, dans une plage de modulation ($f_{Sweep}$) de telle sorte que la fréquence d'un signal d'écho réfléchi par un objet contient une information sur l'éloignement (R), dans lequel l'émetteur émet les signaux électromagnétiques sous forme de tronçons de signaux (A, B) émis alternativement avec un décalage de fréquence ($f_{Shift}$) l'un par rapport à l'autre, et au moyen d'un récepteur pour recevoir les tronçons de signaux réfléchis à partir de l'objet,

dans lequel

le récepteur comporte un dispositif pour constater la différence de phase ($\Delta\varphi$) entre les signaux d'écho engendrés à partir de la succession des tronçons de signaux respectifs (A, B) et pour constater la fréquence des signaux d'écho, **caractérisé en ce que**

les tronçons de signaux (A, B) sont émis chacun avec une fréquence constante et sur la plage de modulation ($f_{Sweep}$) avec chaque fois une fréquence incrémentée ($f_{Incr}$) par pas successif et de façon décalée,

**en ce qu'**un canal commun analogique est prévu pour traiter les signaux d'écho jusqu'à une conversion analogique-numérique, et

**en ce que** dans le récepteur de palpage est prélevée, pour chaque tronçon de signal (A, B), au moins une valeur de palpage, et les valeurs de palpage prélevées pour les différents signaux d'écho sont évaluées séparément pour déterminer la différence de phases ($\Delta\varphi$) du fait que le récepteur comporte un étage de transformation de Fourier après lequel est connecté un dispositif pour déterminer la différence de phases des pics engendrés dans l'étage de transformation de Fourier correspondant à la fréquence des signaux d'écho des tronçons de signaux (A, B).

10. Dispositif selon la revendication 9, **caractérisé en ce que** dans le récepteur on établit de façon univoque la mesure de l'éloignement (R) et de la vitesse (v) par combinaison des mesures équivoques dépendant de la fréquence (k) et de la différence de phases ($\Delta\varphi$) d'une part de l'éloignement et d'autre part de la vitesse.

11. Dispositif selon la revendication 9 ou 10, **caractérisé en ce que** le décalage ($f_{Shift}$) des deux fréquences reste le même sur la totalité la plage de modulation ($f_{Sweep}$).

12. Dispositif selon l'une des revendications 9 à 11, **caractérisé en ce que** pour chaque émission des tronçons de signaux (A, B) des deux fréquences, l'incrémentation à raison d'un pas de fréquence ($f_{Incr}$) est effectuée.

13. Dispositif selon l'une des revendications 9 à 12, **caractérisé en ce que** le pas de fréquence ($f_{Incr}$) correspond au double du décalage ($f_{Shift}$) entre les deux fréquences.

14. Dispositif selon l'une des revendications 9 à 13, **caractérisé en ce que** les tronçons de signaux alternatifs (A, B) sont émis et reçus continuellement.

15. Dispositif selon l'une des revendications 9 à 13, **caractérisé en ce que** entre l'émission d'un tronçon de signal (A) de l'une des fréquences et l'émission d'un tronçon de signal (B) de l'autre fréquence, un décalage temporel est maintenu.

16. Dispositif selon l'une des revendications 9 à 15, **caractérisé par** un émetteur électromagnétique pour l'émission de plus de deux signaux sous forme de tronçons de signaux alternatifs ayant des fréquences différentes les uns par rapport aux autres.

**Fig. 1**

**Fig. 2**

*Fig. 3*

*Fig. 4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3750171 A
- US 5768131 A

- US 5963163 A